# EUROPEAN PATENT APPLICATION

(11) **EP 4 814 530 A1**
(43) Date of publication of application: **30.09.2026**
(21) Application number: 25290011.3
(22) Date of filing: 26.03.2025
(51) Int. Cl.: G01S 7/00, H04L 67/00, H04W 4/38

(54) **A PROCESS FOR COLLECTING INFORMATION BY A CENTRAL UNIT FROM AT LEAST ONE REMOTE UNIT**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: Bonneville, Hervé, 35708 RENNES CEDEX 7 (FR); Bechihi, Adel, 35708 RENNES CÉDEX 7 (FR)
(74) Representative: Plasseraud IP

(57) **Abstract**

A process for collecting information by a central unit (100) from at least one remote unit (1) comprises transmitting at least one of a characterization of a proposed available information (CH(PAI)) and a synthesis of an already-collected information (SYN(ACI)) before at least part of the available information (SEL_INFO) is sent by the remote unit to the central unit. The process allows reducing a transmission payload by deleting overlapping information, or prioritizing information overlaps for providing increased reliability, or also focusing sent information on a target. The process may be used for applications that involve exploration of an environment and building a digital representation of a content of the environment, by collecting sensing results obtained by the at least one remote unit.

## Description

The invention relates to a process for collecting information by a central unit from at least one remote unit, and to an information collecting system that implements such process.

### -- BACKGROUND OF THE INVENTION --

Multi-sensor systems offer significant advantages in various applications, such as autonomous vehicles, surveillance and environmental monitoring, path planning, trajectory optimization and obstacle avoidance, mobile object tracking, etc. By collecting data from multiple sensors, such as LiDARs, cameras and/or radars, these systems can create a digital representation of an environment. One benefit of the multi-sensor systems is enhanced accuracy and reliability allowing better decision-making processes. Additionally, multi-sensor operation allows for better performance in adverse conditions. Redundancy of the information that is provided by the system brings an additional level of robustness against component failures. This ensures that even if one of the sensors fails or is obstructed, the system can still operate efficiently by relying on the other sensors.

However, the integration of multiple sensors introduces communication issues. A major one is the need for high bandwidth to transmit in real-time large amounts of data generated by the sensors, in particular when radio transmission is used. This requirement can be challenging for existing radiocommunication networks, especially in densely populated areas or environments with significant level of interference. Moreover, ensuring low latency is critical for applications that require real-time decision-making, such as autonomous vehicles, control of mobile robots, target tracking or intrusion detection. Any delay in data transmission may cause suboptimal performance or even generate safety issues like car accidents. Another issue is synchronization and homogenisation of data that originate from different sensors for allowing efficient data fusion. Indeed, each sensor may have different sampling rates and data formats, requiring complex algorithms to align and fuse the data accurately. Additionally, the communication process should be robust enough to handle possible failures and maintain continuous operation of the system.

Information redundancy in multi-sensor systems can be exploited either to significantly reduce communication payload and allow more efficient and rapid construction of a digital knowledge, or to provide increased information reliability. Redundancy means that several sensors provide respective pieces of information having mutual relationship or connection. In particular, said pieces of information are said to be redundant or overlapping when they share some common content. Therefore, it is a further issue to allow managing information overlaps in a smart way depending on current transmission and computational resources and/or requirements for the collected information in each application.

Several techniques have already been proposed for addressing these issues, including the following ones:
data fusion, where information from various sensors is processed locally at the data source before transmission, selecting only the most relevant and unique information;
compression techniques to reduce payload size before transmission;
selective data transmission, where in case of several sensors detecting a same object or event, the system prioritizes and transmits data from the most reliable sensor, or the one that provides the highest resolution or most critical information; and
edge-computing, where the data are processed at the edge of the network, close to their source, allowing to filter out unnecessary information and transmit only high-value processed data.

Then, the present invention aims at addressing at least one of the above-mentioned issues in an improved manner compared to already-existing operations. In particular, it aims at allowing improved management of transmission payload and/or better exploitation of redundancy.

### -- SUMMARY OF THE INVENTION --

For meeting this object or others, a first aspect of the present invention proposes a new process for collecting information by a central unit from at least one remote unit through a radiocommunication link that connects the central unit with the remote unit, where the remote unit sends to the central unit at least part of an information that is available at this remote unit. According to the invention, at least one of a characterization of a proposed available information and a synthesis of an already-collected information is transmitted between the remote unit and the central unit before the at least part of the available information is sent by the remote unit to the central unit.

Hence, the invention proposes a communication protocol to be implemented between the central unit and at least one remote unit that is to send information to the central unit, which protocol provides preliminary transmission(s) between these units. This preliminary transmission may allow the remote unit and/or the central unit to select the information that will be sent thereafter by the remote unit to the central unit, so that it can meet requirements, for example communication and/or computational limitations, or meet special information needs or features, in particular related to redundancy. For instance, the proposed preliminary transmission may allow a reduction of the transmission payload by deleting overlapping information, or conversely allow prioritizing information overlaps for providing increased reliability, or also allow focusing sent information on a target for more accurate and/or rapid tracking of this target. Most often, the preliminary transmission allows that the information that is sent by the remote unit to the central unit is reduced in communication payload compared to the whole information as available at the remote unit. The preliminary transmission may be either from the remote unit to the central unit or in reverse direction, or also bidirectional preliminary transmissions.

The invention process may advantageously be used for applications that involve exploration of an environment and building a digital knowledge of a content of this environment, by collecting sensing results which have been obtained by the at least one remote unit.

The content of the preliminary transmission may be of any type, in particular obtained through a selection or sampling or resolution reduction of sensing results that form the information available at the remote unit, or an indication of an environment portion concerned with the information to be sent, including one or more ranges for a pointing direction effective for the information to be sent, metadata related to the information to be sent, high-level data related to the information to be sent, including indication of recognized objects, designation of a target, etc.

Generally, the invention process allows that the information that is sent by the remote unit to the central unit is selected among the information that is available at the remote unit. Determination of the selection to be applied to the information available at the remote unit is a smart or high-level task which can be executed either at the central unit or the remote unit, depending on implementations of the invention.

In first implementations such that the selection may be determined at the central unit, the process may comprise the following steps:
- sending of the characterization of the proposed available information by the remote unit to the central unit; and
- sending of a request for information to be collected by the central unit to the remote unit.
Both opposite chronological orders between these steps can be contemplated. Once it is supplied with the proposed available information, the central unit can determine the selection to be applied by the remote unit for identifying the information to be sent. This selection may be limited to within the proposed available information.

In second implementations such that the selection may be determined at the remote unit, the process may comprise the following steps:
- sending of the synthesis of the already-collected information by the central unit to the remote unit;
- sending of the characterization of the proposed available information by the remote unit to the central unit; and
- sending of a request for information to be collected by the central unit to the remote unit.
Any chronological order between these three steps can be contemplated. Such second implementations may have the advantages mentioned for the first ones. Additionally, if the remote unit is supplied with the synthesis of the already-collected information before it sends its characterization of the proposed available information, the proposed available information can be selected among all information available at the remote unit considering the information already collected by the central unit.

In third implementations also such that the selection may be determined at the remote unit, the process may comprise the following step:
- sending of the synthesis of the already-collected information by the central unit to the remote unit, in a request or as a request for information to be collected.
In such third implementations, the remote unit can determine a selection for its available information, that will enrich the information already collected by the central unit. The remote unit then applies this selection to the available information and sends the so-selected information to the central unit. Such third implementations may be reduced in communication payload involved in the preliminary transmission(s).

Generally for the invention, the information that is available at the remote unit may comprise sensing results obtained by this remote unit performing measurements on an environment. Possibly, these sensing results may form a point cloud. Also possibly, the remote unit may be equipped with a sensing system for performing the measurements, such that each sensing result comprises coordinates of at least one point in the environment where a radiation-reflecting or radiation-diffusing element has been sensed by the sensing system. The sensing system may be at least one of a LiDAR system, a depth camera system, a three-dimensional camera system, a stereo imaging system and a radar system. Also possibly, the sensing results may form an image, a sequence of images or a video.

Again when the information available at the remote unit comprises sensing results, a step sequence that comprises transmission of the at least one of the characterization of the proposed available information and the synthesis of the already-collected information, and the sending of the at least part of the available information, may be performed repetitively in real time or almost real time with respect to the measurements performed by the remote unit on the environment.

For the above-mentioned first and second implementations, the characterization of the proposed available information may comprise at least one of a pointing direction within a sensing field of the remote unit for the measurements on the environment, an extent of the sensing field of the remote unit for the measurements on the environment, a resolution or definition or density of the measurements on the environment, a sampled or compressed version of the sensing results obtained by the remote unit, an indication of a sub-portion of the environment, and an indication of at least one element recognized in the environment. In the particular case of a compressed version of the sensing results obtained by the remote-unit, it may involve spatial compression, or time-compression or mixed spatial- and time-compression.

For the above-mentioned second and third implementations, the synthesis of the already-collected information may comprise a sampled or compressed version of this already-collected information. Spatial compression, or time-compression or mixed spatial- and time-compression may be used in this case too. Other content types listed above for the characterization of the proposed available information may also be used for the synthesis of the already-collected information.

Generally for the invention, two chronological orders can be contemplated alternatively.

In a first implementation, the at least part of the available information that is sent by the remote unit to the central unit may be a subset of information data that have been obtained by the remote unit before the characterization of the proposed available information and/or the synthesis of the already-collected information is transmitted. Thus, the information to be sent is selected after this information has been obtained by the remote unit.

In an alternative implementation, the at least part of the available information that is sent by the remote unit to the central unit may be obtained by the remote unit after the characterization of the proposed available information and/or the synthesis of the already-collected information is transmitted, according to a selection applied to at least one information obtaining parameter implemented by the remote unit. Such information obtaining parameter may be a field of view or a pointing direction to be used for new measurements, for example. Such alternative implementation allows limiting the information that is obtained by the remote unit to the content to be sent to the central unit. Useless information acquisition is thus avoided.

Generally for the invention, a step sequence that comprises the transmission of the characterization of the proposed available information and/or the synthesis of the already-collected information, and also comprising the sending of the at least part of the available information, may be executed in parallel for each of a plurality of remote units that are connected to the central unit through respective radiocommunication links. In particular, the synthesis of the already-collected information when used may be sent by the central unit to the remote units using multicast transmission.

Again generally for the invention, each remote unit may be a fixedly located unit, for example for surveillance and environmental monitoring, a mobile unit, in particular an automated guided vehicle (AGV) in a factory, an unmanned mobile unit, preferably an unmanned aerial vehicle commonly referred to as UAV. Indeed, such mobile units especially suit for exploring many environments, including indoor or outdoor environments, disaster-stricken and hostile environments.

A second aspect of the invention proposes an information collecting system that comprises a central unit and at least one remote unit, the central unit and the at least one remote unit being configured for implementing a process according to the first invention aspect. In possible embodiments, the central unit may comprise an application server and each remote unit may be a sensing unit, in particular a mobile sensing unit in which at least one sensing system is onboard a mobile carrier.

These and other features of the invention will be now described with reference to the appended figures, which relate to preferred but not-limiting implementations of the invention.

### -- BRIEF DESCRIPTION OF THE DRAWINGS --

Figure 1 shows an information collecting system which is suitable for implementing the invention.
Figure 2 is a block-diagram which shows components internal to one remote unit of the data collecting system of Figure 1.
Figures 3, 4 and 5 display respective communication sequences used in three possible implementations of the invention.

As a rule, same reference signs which are indicated in different ones of these figures denote identical elements of elements with identical function.

### -- DETAILED DESCRIPTION OF THE INVENTION --

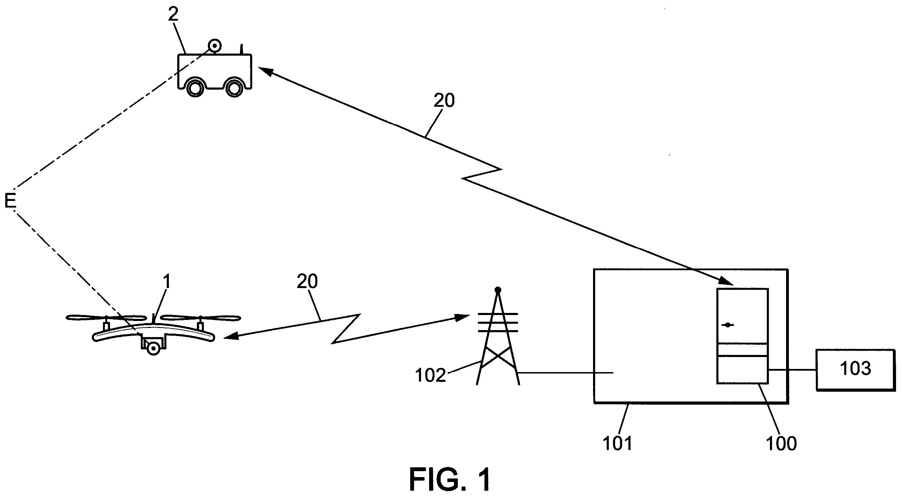

Referring to Figure 1, an information collecting system comprises a central unit 100 and at least one remote unit, possibly several remote units. Each remote unit may be a mobile sensing unit. The figure shows two remote sensing units 1 and 2 as an example but more than two may be advantageous for some applications. The sensing units are used for acquiring information about a content of an environment E by performing measurements on this content. The central unit 100 may comprise an application server with computational and storage means, configured for collecting information transmitted by the sensing units 1, 2 about the environment content, and using this information for building a digital representation of the content of the environment E. In particular, the central unit 100 may be configured to perform operations such as information analysis, information comparison, information merging, data aggregation, information classification and possibly also high-level operations such as object recognition and target tracking. The information data that are collected by the central unit 100 may be comprised of data points, in particular when these data are sensing results obtained using active radiation-based system, but other data formats may be used alternatively or in combination such as images or matrix data.

Each sensing unit 1, 2 is connected to the central unit 100 by a radiocommunication link 20 which may be of any type. For example, each sensing unit 1, 2 may be connected to the central unit 100 through a dedicated radiocommunication bidirectional channel, such as a WiFi connection link for example. Alternatively, each sensing unit 1, 2 may be connected to the central unit 100 via a communication network, for example 4G or 5G, which comprises a core network 101 that extends up to base stations, and each sensing unit is connected to one of the base stations by a radio link. Reference number 102 denotes such a base station that currently radio-connects to the sensing unit 1. Possibly, the central unit 100 may be further connected to a client's device 103, for providing the client with the information collected by the central unit 100. With such client configuration, operation of the information collecting system may be triggered by an initial client's request, and the collected information transmitted by the central unit 100 to the client's device 103 periodically or in response to transmission requests sent by the client.

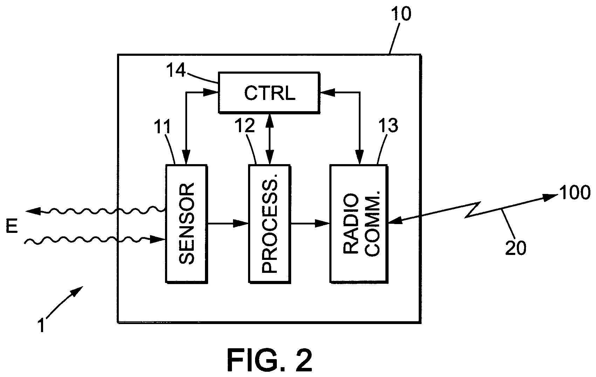

In the embodiment represented in Figure 2, the sensing unit 1 is a device which can perform measurements with content elements of the environment E. Measurement systems such as camera-based or radar systems may be used in combination with or alternatively to a LiDAR system onboard the sensing unit 1. In particular, LiDAR systems can have high-resolution 3D-mapping capabilities, which are beneficial for detecting and classifying objects accurately, thereby allowing a comprehensive representation of the environment content. For instance, while camera-based systems might struggle in low-light conditions, LiDAR systems can operate efficiently regardless of lighting conditions, and radar systems can penetrate through some objects, including rain, or fog, or vegetal cover in land areas, and provide extended fields of view.

Components internal to the sensing unit 1 may comprise:
- a carrier 10, for carrying onboard the other device components;
- the sensing system 11, noted SENSOR, for performing the measurements with the environment content according to a variable pointing direction. Figure 2 symbolically shows LiDAR radiation emitted toward the environment E and sensed backscattered radiation;
- a data processing unit 12, denoted PROCESS. and suitable for processing sensing results produced by the sensing system 11;
- a radiocommunication unit 13, denoted RADIO COMM. and suitable for communicating with the central unit 100 through the radio link 20; and
- a controller module 14, denoted CTRL and configured for controlling coordinated operations of the preceding components of device 1.

Depending on implementations of the invention, the data processing unit 12 may be configured to perform operations such as information analysis, information comparison, information classification and selection, and possibly also high-level operations such as object recognition and target tracking.

The below disclosure relates to a communication protocol to be implemented between each sensing unit such as sensing unit 1, and the central unit 100. This protocol allows smart selection of the sensing results that are sent to the central unit 100, with several variants allowing the selection to be determined either at the central unit 100 or at the sensing unit 1. For parallel implementation with several or all of the sensing units of the information collecting system, at least some of the communications from the central unit 100 may be sent using multicast transmission, so that several or all of the sensing units simultaneously receive these communications. Also in a usual way, an initializing step may consist in a registration of each sensing unit 1, 2 at the central unit 100, in particular for indicating capacities of the sensing unit, a type of its sensing system, communication features special to the sensing unit, etc. Such registration step is common in the field of cooperating units.

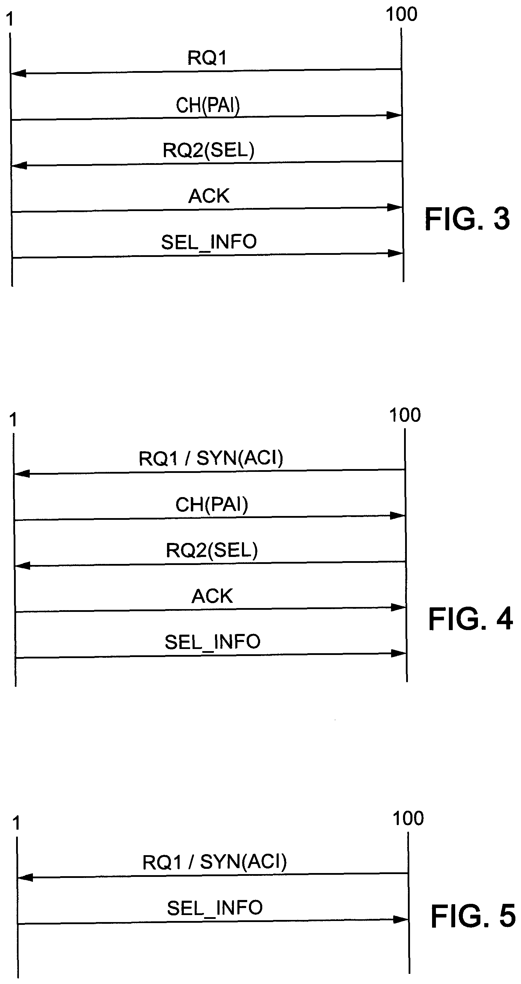

A first implementation allowing the selection to be determined at the central unit 100 is now described with reference to Figure 3. Vertical lines in this figure represent each of the sensing unit 1 and the central unit 100 as a communication node, and horizontal arrows represent radio-transmissions from the sensing unit 1 to the central unit 100 or in reverse direction. RQ1 is a request from the central unit 100, for the sensing unit 1 to send back a characterization of a proposed available information. The proposed available information may be characterized using any form, including low-level form such as a sampling of already-obtained sensing results or a compressed content built from these already-obtained sensing results, or a characterization of a sensing field corresponding to the already-obtained sensing results, including a range for a pointing direction of the sensing system 11 and/or an extent of its field of view, or high-level form such as indication of a recognized object or a target. One or several of these information formats may be indicated in the request RQ1. Alternatively, the proposed available information may not be comprised of already-obtained sensing results but relate to sensing parameters, e.g. pointing direction, extent of the field of view, resolution, etc, that can be used for measurements to be performed. It is also possible that the request RQ1 does not contain any indication of the format to be used for the proposed available information. Then, a default format is to be used by the sensing unit 1, for example depending on the type of its sensing system 11 and capabilities, the quality of the radio link 20, etc. The sensing unit 1 responds to the request RQ1 by sending a message that contains a characterization of the proposed available information CH(PAI), i.e. a characterization of proposed available sensing results for the applications considered in the present example. The central unit 100 proceeds with comparing the proposed available information with information needs and/or already-collected information it may have, and determines a selection to be applied to the information that is available at the sensing unit 1 such that the selected information will be useful for the application. Such selection may be determined for reducing or suppressing information overlaps in case redundancy occurs either between part of already-collected information and part of proposed available information, referred to as time-redundancy, or between information available simultaneously at several sensing units, referred to as spatial redundancy. Alternatively, the selection may be determined for benefiting from redundancy, in particular for increasing reliability of an identified part of the collected information. If several sensing units are used in parallel, the selection determined by the central unit 100 may consider distributing the task of obtaining information between the multiple sensing units. Thereafter, the central unit 100 sends a request RQ2(SEL) that contains the determined selection, to the sensing unit 1. This selection may be expressed in different ways, including the formats here-above recited for the characterization of the proposed available information. Once this request RQ2(SEL) is received by the sensing unit 1, this latter acknowledges with message ACK and implements the selection with the already-obtained sensing results which are stored at this sensing unit and/or with sensing parameters used for performing new measurements. The selected information, i.e. selected sensing results, is then transmitted to the central unit 100 in the message SEL_INFO. The central unit 100 is then able to combine the selected information just received with already-collected information, in particular by implementing an information aggregation process. The communication sequence that is displayed in Figure 3 may be repeated multiple times as a continuous process execution.

As a variant, the request RQ1 may no longer be used and the sensing unit 1 may periodically send messages CH(PAI) that each contains a characterization of an updated proposed available information. After reception of one of these messages CH(PAI), the central unit 100 issues the request RQ2(SEL) as before and the process continues in the same way.

Figure 4 corresponds to Figure 3 for a second implementation suitable for the selection to be determined at the sensing unit 1. Description elements already provided that are still relevant are not repeated but using them if necessary or beneficial for the contemplated application will be obvious. In this second implementation, the request RQ1 that is first sent by the central unit 100 to the sensing unit 1 contains a synthesis of information that has already been collected by the central unit 100, denoted SYN(ACI). Alternatively, sending of this synthesis of the already-collected information SYN(ACI) may constitute the request RQ1 per se. Possibly, the synthesis may indicate that no information has been already collected, for example when starting information collection. The synthesis of the already-collected information may have any form, including at least one among an indication of portions of the environment E concerned with sensing results that have already been transmitted to the central unit 100, a resolution indication, an extent of the sensing field, an indication of the collection time for at least part of the already-collected information, a sampling or compression applied to the already-collected information, an indication of at least one already-recognized object, an indication of a target being tracked, etc. If several sensing units are used in parallel, the synthesis of the already-collected information SYN(ACI) may be sent to all of them using either unicast or multicast transmission. Another option to select the sensing units to transmit the SYN(ACI) message to is to statistically define groups of sensing units, for example during the initial registration step, based on their respective locations or based on their respective capacities. Still another option is to group the sensing units from base stations they are linked to, the coverages of the base stations then defining the broadcast areas. The sensing unit 1, or each sensing unit if several are used in parallel, proceeds with comparing the already-collected information received from the central unit 100 with information that is currently available at this sensing unit. The process is further described for the sensing unit 1 only, but it may be executed similarly and simultaneously by each sensing unit that is involved with supplying information to the central unit 100. The sensing unit 1 determines a selection that could be applied to information, i.e. sensing results, which is available at this sensing unit. This selection may be determined for enriching the already-collected information based on the characterization thereof as previously received by the sensing unit 1, and possibly further based on additional criteria such as a resolution and/or a coverage to be obtained, a target to be tracked, etc. Again, the selection is intended to be applied on sensing results already obtained by the sensing unit 1 and/or sensing results to be obtained by the sensing unit 1 using controllable sensing parameters such as pointing direction, field of view, resolution, etc. The determined selection constitutes the proposed available information in the present implementation, and a characterization thereof is transmitted by the sensing unit 1 to the central unit 100 in the message CH(PAI). After reception of this message CH(PAI), the central unit 100 may adapt of refine the selection, for example about criteria such as resolution, coverage, extent of the sensing field, identified target, etc, in particular considering respective characterizations received from other sensing units if any, an in such case possibly for exploiting redundancy in a useful manner. Refined or accepted selection is expressed by the central unit 100 to the sensing unit 1 in the request RQ2(SEL), and the process is continued as in the first implementation of Figure 3. The communication sequence that is displayed in Figure 4 may also be repeated multiple times as a continuous process execution.

Figure 5 corresponds to Figure 4 for a third implementation in which the selection is determined again at the sensing unit 1. This third implementation is obtained from the second one by skipping the steps of transmitting the message CH(PAI) by the sensing unit 1, and also skipping the steps of refining or accepting the selection by the central unit 100 and transmitting the request RQ2(SEL). Such third implementation allows suppressing any participation of the central unit 100 in the information selection determination, the selection being then fully determined at each sensing unit. In such third implementations, each sensing unit determines a selection to be applied to information available at this sensing unit once it has received the request RQ1 that includes the synthesis SYN(ACI) of the information already collected by the central unit 100. After the selection has been determined by the sensing unit 1, this latter can directly implement this selection with the information it has or with the sensing parameters to use for the next measurements. The so-selected information is then transmitted by the sensing unit 1 to the central unit 100 without any further request or other action from the latter being necessary. Possibly, the sensing unit 1 may repeat the steps of determining and applying a relevant selection and sending the resulting selected information several times by successive messages SEL_INFO before it receives a new synthesis SYN(ACI) from the central unit 100. Such third implementations assign maximum decision autonomy to the sensing units but may lead to less consistency between information inputs from a plurality of sensing units.

Although the invention has been described for applications where the collected information is comprised of sensing results obtained by performing measurements on an environment content, it may be advantageously used for any application involving information collection from at least one remote unit.

## Claims

1. A process for collecting information by a central unit (100) from at least one remote unit (1, 2) through a radiocommunication link (20) that connects the central unit with the remote unit, wherein the remote unit sends to the central unit at least part of an information that is available at said remote unit, **characterized in that** at least one of a characterization of a proposed available information (CH(PAI)) and a synthesis of an already-collected information (SYN(ACI)) is transmitted between the remote unit (1, 2) and the central unit (100) before the at least part of the available information is sent by the remote unit to the central unit.

2. The process of claim 1, comprising the following steps:
- sending of the characterization of the proposed available information (CH(PAI)) by the remote unit (1, 2) to the central unit (100); and
- sending of a request for information to be collected (RQ2(SEL)) by the central unit (100) to the remote unit (1, 2).

3. The process of claim 2, further comprising the following steps:
- sending of the synthesis of the already-collected information (SYN(ACI)) by the central unit (100) to the remote unit (1, 2).

4. The process of claim 1, comprising the following step:
- sending of the synthesis of the already-collected information (SYN(ACI)) by the central unit (100) to the remote unit (1, 2), in a request or as a request (RQ1) for information to be collected.

5. The process of one of the preceding claims, wherein the information that is available at the remote unit (1, 2) comprises sensing results obtained by said remote unit performing measurements on an environment (E).

6. The process of claim 5, wherein the sensing results obtained by the remote unit (1, 2) form a point cloud.

7. The process of claim 5 or 6, wherein the remote unit (1, 2) is equipped with a sensing system (11) for performing the measurements, such that each sensing result comprises coordinates of at least one point in the environment (E) where a radiation-reflecting or radiation-diffusing element has been sensed by the sensing system, said sensing system being at least one of a LiDAR system, a depth camera system, a three-dimensional camera system, a stereo imaging system and a radar system.

8. The process of one of claims 5 to 7, wherein a step sequence that comprises transmission of the at least one of the characterization of the proposed available information (CH(PAI)) and the synthesis of the already-collected information (SYN(ACI)), and the sending of the at least part of the available information (SEL_INFO), is performed repetitively in real time or almost real time with respect to the measurements performed by the remote unit (1, 2) on the environment (E).

9. The process of claim 2 or 3 and one of claims 5 to 8, wherein the characterization of the proposed available information (CH(PAI)) comprises at least one of a pointing direction within a sensing field of the remote unit (1, 2) for the measurements on the environment (E), an extent of the sensing field of the remote unit for the measurements on the environment, a resolution or definition or density of the measurements on the environment, a sampled or compressed version of the sensing results obtained by the remote unit, an indication of a sub-portion of the environment, and an indication of at least one element recognized in the environment.

10. The process of claim 3 or 4 and one of claims 5 to 8, wherein the synthesis of the already-collected information (SYN(ACI)) comprises a sampled or compressed version of said already-collected information.

11. The process of one of claims 1 to 10, wherein the at least part of the available information (SEL_INFO) that is sent by the remote unit (1, 2) to the central unit (100) is a subset of information data that have been obtained by said remote unit before the characterization of the proposed available information (CH(PAI)) and/or the synthesis of the already-collected information (SYN(ACI)) is transmitted.

12. The process of one of claims 1 to 10, wherein the at least part of the available information (SEL_INFO) that is sent by the remote unit (1, 2) to the central unit (100) is obtained by said remote unit after the characterization of the proposed available information (CH(PAI)) and/or the synthesis of the already-collected information (SYN(ACI)) is transmitted, according to a selection applied to at least one information obtaining parameter implemented by said remote unit.

13. The process of one of the preceding claims, wherein a step sequence comprising the transmission of the characterization of the proposed available information (CH(PAI)) and/or the synthesis of the already-collected information (SYN(ACI)), and also comprising the sending of the at least part of the available information (SEL_INFO), is executed in parallel for each of a plurality of remote units (1, 2) that are connected to the central unit (100) through respective radiocommunication links (20).

14. The process of claim 13, wherein the synthesis of the already-collected information (SYN(ACI)) is sent by the central unit (100) to the remote units (1, 2) using multicast transmission.

15. An information collecting system comprising a central unit (100) and at least one remote unit (1, 2), the central unit and the at least one remote unit being configured for implementing a process according to one of the preceding claims.
